# EUROPEAN PATENT APPLICATION

(11) **EP 4 575 755 A1**
(43) Date of publication of application: **25.06.2025**
(21) Application number: 24221682.8
(22) Date of filing: 19.12.2024
(51) Int. Cl.: G06F 3/16

(54) **FEDERATION OF DOMAIN-SPECIFIC AGENTS**

(30) Priority: 22.12.2023 US 202363613855 P
(71) Applicant: Cerence Operating Company, Burlington, MA 01803 (US)
(72) Inventor: Kolluru, Balakrishna Venkata Jagannadha, Burlington, 01803 (US); Arshad, Iqbal, Burlington, 01803 (US); Benien, Christian, Burlington, 01803 (US)
(74) Representative: Haseltine Lake Kempner LLP

(57) **Abstract**

An automotive assistant that executes in an infotainment system of a vehicle includes an arbitrator that is configured to receive the audio input provided by the occupant and, based at least in part on the audio input, to output a member-selection signal that selects a domain-specific member from a federation of domain-specific members. The automotive assistant is further configured to receive content from the selected domain-specific member for use in providing and to provide audio output to respond to the audio input provided by the occupant. This audio output is based at least in part on the content from the selected domain-specific member of the federation of domain-specific members.

## Description

### Related Applications

This application claims the benefit of the 12/22/2023 priority date of U.S. Provisional Application 63/613,855, the contents of which are herein incorporated by reference.

### Background

A large language-model provides a machine with a way to simulate the behavior of a human being. Using such a model, a machine attempts to predict how a human being would respond to a prompt. To build such a model, one has to train it. This involves causing the machine to learn various patterns that are consistent with how human beings respond to particular prompts.

The subject matter required to respond to a prompt is generally not known in advance. It is therefore useful to train the large language-model using information that spans multiple domains of human knowledge. This promotes the model's ability to deliver meaningful response to prompts that span the gamut of human knowledge.

The breadth that results from having trained a model in so many different domains of subject matter results in a large model, hence the name "large language-model." This size comes at a cost, however. As a model becomes "large," it becomes increasingly difficult to use it on a system having limited computational resources. This is a particular difficulty when the computing system is integrated into an automobile.

This problem is easily overcome by providing such a system with a connection to a system that has adequate computational resources, such as a remote server. In such an implementation, the system relays the prompt to the remote server and waits while the remote server does the work of generating a response. Then, the system receives the response from the remote server.

As is often the case, every solution just creates a new problem. In this case, the problem is latency. Since the remote server presumably serves other users, one cannot predict or control how long it will take to receive a response.

In a moving vehicle, it is important to deliver information in a timely fashion. For example, if one wants to know whether or not a particular exit on a highway leads to an intended destination, it is important to have an answer before one passes the exit. It is therefore desirable to avoid having to interact with a remote server since doing so introduces unpredictable latencies.

Another problem arises, ironically, from the sheer comprehensiveness of a large language-model. It turns out that natural languages often use similar words and phrases in completely different contexts. It is therefore quite possible to misinterpret a prompt's context. Given that a large language-model spans multiple domains of knowledge, it comes as no surprise that it will occasionally deliver a response that is entirely different from what the prompt intended.

### Summary

The invention avoids reliance on using a single large language-model to respond to a variety of questions in favor of using domain-specific large language-models that are members of a "federation" of large language-models. For convenience, these domain-specific large language-models will be referred to herein as "member models."

In one aspect, the invention contemplates receiving a query and then carrying out an arbitration process that directs that query to an appropriate task-specific member model that has been trained specifically for a domain towards which the query is directed.

Since the federation's members, i.e., the task-specific member models or domain-specific members, are often executed on different hardware elements at different locations, the arbitrator addresses the technical problem of routing queries to those hardware elements that are regarded as being most suitable for addressing those queries. For example, in some cases, a first member of the federation executes on a remote server and a second member of the federation executes locally. In such cases, the arbitrator operates as a router that routes a query to one or the other based on properties of the query and of the federation's members.

In another aspect, the invention contemplates taking a subset of a large language-model, finetuning and/or distilling that subset to incorporate task-specific information. This smaller large language-model, suitably processed as described above, is then incorporated into a federated environment, i.e., as a member of a federation of large language-models that are independent for each other but then brought into limited cooperation through the use of an arbitrator.

As an example, consider an occupant who is in a vehicle close to dinnertime. Being a stranger to the local environment, the occupant asks the vehicle's automotive assistant to find a nearby Albanian restaurant. In response, the automotive assistant invokes an arbiter to direct the query to a cuisine-specific member of the federation, which promptly provides the address of a nearby Albanian restaurant as well as an image of the menu.

The occupant, not being fluent in Albanian, finds difficulty in understanding significant portions of the menu. Accordingly, the occupant asks the automotive assistant to translate it. In response, the arbitrator directs the query to a different member of the federation, namely one specific to the Albanian language.

A technical advantage of the invention arises from the ability to constrain the responses to a query to a particular domain. This avoids the likelihood of the query generating answers that are relevant to a domain that shares some of the vocabulary used in the target domain but is nevertheless an incorrect domain. Another technical advantage of the invention is that of reducing computational burden. Moreover, the use of a federation of member models rather than one model makes it practical to store some of the federation's members locally for faster access from within the vehicle.

In one aspect, the invention features an automotive assistant that executes on an infotainment system of a vehicle. Such an automotive assistant includes an arbitrator that is configured to receive the audio input provided by the occupant and, based at least in part on the audio input, to output a member-selection signal that selects a domain-specific member from a federation of domain-specific members. The automotive assistant is further configured to receive content from the selected domain-specific member for use in providing and to provide audio output to respond to the audio input provided by the occupant. This audio output is based at least in part on the content from the selected domain-specific member of the federation of domain-specific members.

Embodiments include those that include a first domain-specific member of the federation. This first domain-specific member is one that is embedded in the vehicle.

In other embodiments, the domain-specific members of the federation include one that comprises a large-language-model.

Also among the embodiments are those in which wherein the domain-specific members of the federation comprise a first domain-specific member and a second domain-specific member. In such embodiments, the first domain-specific member is embedded in the vehicle and the second domain-specific member is at a remote server.

Embodiments further include those in which arbitrator includes a large language-model, those in which the arbitrator includes a graph neural network, and those in which the arbitrator includes a neural network.

Some embodiments include a query divider as part of the arbitrator. This is useful for processing compound queries, which include two or more atomic queries. In such embodiments, the query divider partitions the compound query into first and second atomic queries. The arbitrator then selects a first domain-specific member of the federation for providing content responsive to the first atomic query and a second domain-specific member of the federation for providing content responsive to the second atomic query.

Still other embodiments include those in which the automotive assistant further includes a multiplexer configured to receive the member-selection signal. This multiplexer is in data communication with each of the domain-specific members of the federation. The multiplexer provides a prompt generated by the arbitrator to the selected domain-specific member of the federation.

Among these are embodiments in which the automotive assistant further includes two multiplexers, both of which are in data communication with each of the domain-specific members. The first of the two multiplexers provides a prompt generated by the arbitrator to the selected domain-specific member of the federation. The second of the two multiplexers receives content from the selected domain-specific member of the federation and provides the content to automotive assistant.

Still other embodiments include a response generator and a text-to-speech converter. In these embodiments, the response generator receives the content from the selected domain-specific member of the federation and generates a response based on the content and the text-to-speech converter receives the response, which will ultimately be used for the audio output.

Embodiments further include those that include the vehicle and/or the infotainment system as parts of the invention.

Still other embodiments include those in which the arbitrator is one that has been trained in conjunction with a domain-specific member. Among these are embodiments in which the arbitrator has been trained jointly with a domain-specific member from the federation of domain-specific members and those in which the arbitrator is one that has been trained severally with a domain-specific member from the federation of domain-specific members.

Among the foregoing embodiments are those in which the arbitrator is trained on a first set of training data and the member is trained on a second set of training data, the second set being different from the first set.

In another aspect, the invention features a method carried out by a processing system that includes an automotive assistant that executes on an infotainment system of a vehicle. The method includes receiving an audio input from an occupant in the vehicle, selecting a domain-specific member from a federation of domain-specific members based at least in part on the audio input, receiving content from the selected domain-specific member, and using the content for providing audio output responsive to the audio input.

In yet another aspect, the invention features a digital automotive assistant that executes in a processing system. Such a digital assistant includes an arbitrator that is configured to receive the audio input provided by a human being and based at least in part on the audio input, to output a member-selection signal that selects a domain-specific member from a federation of domain-specific members. The digital assistant is further configured to receive content from the selected domain-specific member for use in providing and to provide audio output to respond to the audio input provided by the human being. This audio output is based at least in part on the content from the selected domain-specific member of the federation of domain-specific members.

### Description of Drawings

FIG. 1 shows an example of a particular architecture for an automotive assistant that implement the arbitrator for a federation of domain-specific federation members and
FIG. 2 shows details of a federation member from FIG. 1 that communicates with an external application;
FIG. 3 shows details of the repository and memory shown in FIG. 2;

### Detailed Description

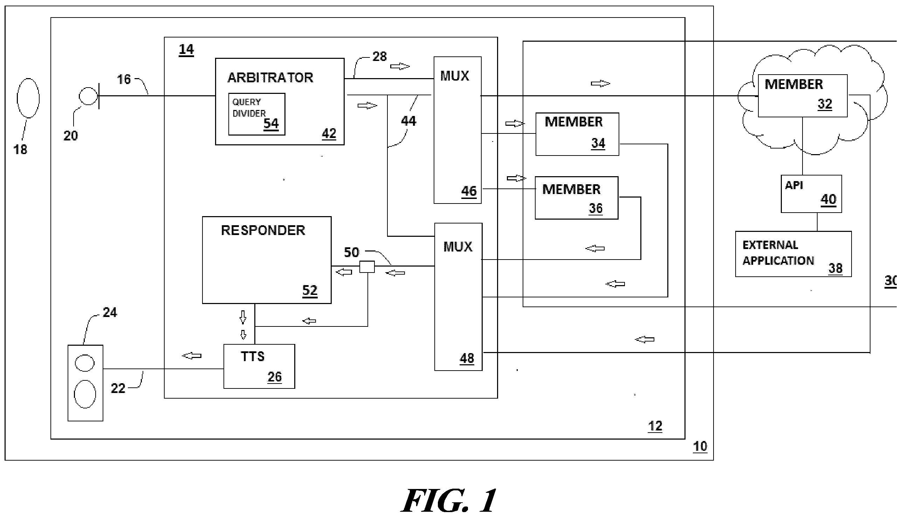

FIG. 1 shows a vehicle **10** having an infotainment system **12** that executes an automotive assistant **14.** The automotive assistant **14** receives audio input **16** from an occupant **18** of the vehicle **10.** It does so via a microphone **20.** The automotive assistant **14** then provides audio output **22** back to the occupant **18** via a loudspeaker **24** that sounds out speech provided by a text-to-speech converter **26.**

The audio output **22** includes certain requested information. One way to generate this information is to provide a prompt **28** to a federation **30.** The federation **30** comprises plural members, of which FIG. 1 shows a first member **32,** a second member **34,** and a third member **36.** Each of the federation's members **32, 34, 36** includes a large language-model. As suggested by the figure, the first federation-member **32** is remote from the vehicle **10** whereas the second and third federation's members **32, 34** are embedded in the vehicle **10.** In some cases, an external source, such as the manufacture of the vehicle **10,** provides one or more of the federation's members **32, 34, 36.**

A union of the federation's members **32, 34, 36** defines a body of information upon which to base the information in the audio output **22.** This body of information is divisible into individual "domains." Although the domains are not identical to each other, it is not impossible for certain information to belong to more than one domain. The domains thus define a plurality of sets that are not necessarily disjoint.

Each of the federation's members **32, 34, 36** has available to it information from a corresponding one of these domains. This makes the federation's members **32, 34, 36** "domain specific." The federation's members **32, 34, 36** need not be the same size. Each member **32, 34, 36** includes a domain-specific automotive large language-model that has been fine-tuned based on one or more niche datasets to respond in such a way as to engage in a domain-specific interaction.

In some embodiments, one or more of the federation's members **32, 34, 36** is configured to process a task by interacting with an external application **38,** for example by providing that external application with a suitable function call using that application's application-program interface **40.**

In the illustrated embodiment, the first member **32** provides information from a first domain, the second member **34** provides information from a second domain, and the third member **36** provides information from a third domain. Examples of domains include the domain of traffic information, the domain of restaurant information, and the domain of astrophysical information.

The automotive assistant **14** includes an arbitrator **42** that receives the audio input **16** and determines which of the federation's members **32, 34, 36** is most likely to be able to provide satisfactory content for the audio output **22.** Having done so, the arbitrator **42** provides a member-selection signal **44** to first and second multiplexers **46, 48,** both of which are in data communication with each member **32, 34, 36** of the federation **30.** In response to the member-selection signal **44,** the first multiplexer **46** directs the prompt **28** to a selected one of the federation's members **32** and also directs the second multiplexer **48** to receive content **50** from that member **32.**

As a result of having been provided with the member-selection signal **44,** the second multiplexer **48** ultimately provides the content **50** to either a response generator **52** or directly to the text-to-speech converter **26.** The response generator **52** is used when the content 50 requires further transformation to be consistent with an occupant's expectation.

The arbitrator determines which of the federation's members **32, 34, 36** is most likely to satisfactorily respond to the user's audio input **16.** In some embodiments, the arbitrator **42** incorporates a large language-model that has been trained to select the appropriate member **32, 34, 36** based on cues found in the audio input **16.**

In some embodiments, the arbitrator **42** receives a request that requires performance of plural tasks by different ones of the federation's members **32, 34, 36.** In such cases, the arbitrator **42** parses the request into individual tasks and routes each one to the appropriate member **32, 34, 36.** It does so through the use of a query divider **54.**

The query divider **54** receives a compound query and decomposes it into plural atomic queries. For a case in which plural atomic queries exist, the arbitrator **42** has the ability to select more than one of the federation's members **32, 34, 36.** This allows different ones of the federation's members **32, 34, 36** to provide content responsive to different atomic queries.

In some cases, the nature of the tasks is such that there exists a natural order in which they should be performed. In such cases, the arbitrator **42** routes the tasks to different ones of the federation's members **32, 34, 36** in an order that is consistent with this natural order.

A particularly useful architecture for such a large language-model is one based on a graph neural-network. Other embodiments of an arbitrator **42** that incorporate a neural network include those implemented as a large language-model or any deep neural network. Also among the implementations of the arbitrator **42** are those that implement a combination of an encoder and a decoder.

In some embodiments, the arbitrator **42** amounts to an M-way classifier that selects one of *M* federation members **32, 34, 36** as being the appropriate provider of content **50** for a given audio input **16.** However, in some cases, the audio input **16** is sufficiently complicated so that one may need content **50** from two or more of the members **32, 34, 36** to correctly formulate the audio output **22.** This arises often when the audio input **16** includes a compound query that comprises plural atomic queries.

In those cases in which the arbitrator **42** and the federation's members **32, 34,** 36 comprise large language-models, the arbitrator **42** and each member **32, 34, 36** are trained either jointly or severally.

The training process for training the arbitrator **42** jointly with a member **32, 34, 36** is an iterative process in which, during each step of the iteration, the weights for the arbitrator **42** and those for the member **32, 34, 36** are adjusted together. This is a computationally intensive process.

The process for training the arbitrator **42** severally with a member **32, 34, 36** is likewise an iterative process. However, in this case, each step of the iteration has two distinct phases. In one phase, the weights of the arbitrator **42** are frozen while those of the member **32, 34, 36** are adjusted. In another phase, the weights of the member **32, 34, 36** are frozen while those of the arbitrator **42** are adjusted.

It has been discovered that training the arbitrator **42** severally with the member **32, 34, 36** reduces the computational effort of training at the cost of only a small decrease in accuracy. Nevertheless, this small decrease in accuracy has been found to be large enough to distinguish accurately between a product that has been made by jointly training the arbitrator **42** and the **32, 34, 36,** a product that has been made by severally training the arbitrator **42** and the **32, 34, 36,** and a product that has been made by neither jointly nor severally training the arbitrator **42** and the member **32, 34, 36.** As a result, the manufacturing process steps impart distinctive structural characteristics to the final product, i.e. the arbitrator **42.** In other words, a product made by one process, i.e., training jointly, will be functionally and structurally distinct from another process, i.e., training severally, i.e., using a dual-phase training method.

In the aforementioned dual-phase training method, each phase includes freezing one set of weights while allowing another set of weights to vary.

In one phase, it is the arbitrator's weights that vary; those of the member **32, 34, 36** are frozen. In this phase, the arbitrator **42** learns to assign particular prompts to particular ones of the federation's members **32, 34, 36** using a mixture-of-experts method in which a given prompt is provided to each member **32, 34, 36,** which in turn results in a corresponding set of responses. The nature of these responses provides a basis for forming a weighting vector for the arbitrator **42.** This enables the arbitrator **42** to gradually learn those features of a prompt that define an affinity for a particular one of the federation's members **32, 34, 36.** The outcome of this first training phase is an arbitrator **42** that has learned how to map a given prompt to the correct member **32, 34, 26** with a high probability.

In some embodiments, certain ones of the federation's members **32, 34, 36** have been trained to process an ambiguous prompt, i.e., a prompt that manifests two or more user intents. Such federation's members **32, 34, 36** are assigned a label prior to training the arbitrator **42.** Accordingly, upon receiving an ambiguous prompt that manifests more than one user intent, the arbitrator **42** provides the ambiguous prompt only to those federation's members **32, 34, 36** that have been so labelled.

In the other phase, the federation members' weights are unfrozen and those of the arbitrator **42** are frozen. Then, for each prompt in a set of training prompts, each member **32, 34, 36** responds with an output and assigns a "prompt score" to the prompt, the score being indicative of an extent to which the member **32, 34, 36** is able to respond to that prompt. As a result, upon completion of this phase, the federation's members **32, 34, 36** will have been fine-tuned to receive a prompt, to respond to it, and to score that response. In combination with the first phase, this results in the arbitrator **42** having learned to process the federation's members' responses and each of the federation's members **32, 34, 36** having learned how to interpret an arbitrator's requests.

In operation, after having been trained, the arbitrator **42** sends a prompt to whichever member **32** that it considers to be the best choice given the nature of the prompt. That member **32** either returns a response if it can. If not, it returns a prompt score that indicates it could not meaningfully respond. In the latter case, the arbitrator **42** then provides the prompt to a member **34** that it considers to be the next-best choice, at which point the foregoing process repeats.

Since the number of the federation's members **32, 34, 36** is finite, there exists a risk of being unable to respond to a user's request. To avoid this, it is useful to designate one member **36** as a member of last resort. This member **36** will provide a response even if all others of the federation's members **32, 34** are unable to do so.

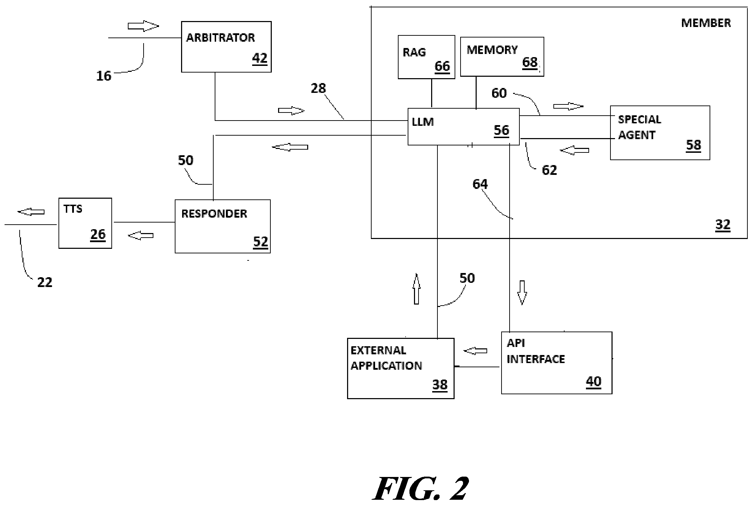

FIG. 2 shows an example in which the arbitrator **42** has determined that the occupant **18** seeks information in a particular domain, i.e., the "weather domain." The arbitrator **42** thus causes the prompt **28** to be sent to a member **32** that is configured to respond to queries in the weather domain.

Weather information is the type of current information that would typically require consulting an external application **38.** This means communicating with the external application **38** through an API interface **40** thereof. In the illustrated embodiment, the member **32** includes a large language-model **56** that is in communication with a special agent **58.** The special agent **58** is one that knows the various functions and arguments that are to be provided to the external application **38.**

The large language-model **56** transmits a call query **60** to the special agent **58.** The call query **60** includes information on the nature of the information sought by the prompt **28.**

In response to the call query **60,** the special agent **58** provides a function-call precursor **62** back to the large language-model **56.** The function-call precursor **62** includes information concerning the relevant function-call and arguments that must be provided to the external application's application-program interface **40.**

Using the function-call precursor **62,** the large language-model **56** generates a function-call **64** and provides it to the application-program interface **40.** This causes the external application **38** to generate the content **50** containing the information sought.

In some cases, this content **50,** while containing relevant information, is generally not in a form suitable for delivery to the occupant **18** as audio output **22.** In such cases, the member **32** provides the content to the responder **52,** as shown in FIG. 2.

In a particular example, a prompt **28** of the form, "What's the weather at Pemberley?" results in a function-call query **60** of the form, "`Prompt', `What is the weather in Pemberley?‴ This results in a function-call precursor **62** of the form "'function-name', 'get-weather', 'arguments', 'Pemberley'", which in turn provides the basis for generating a function-call **64** of the form "`get-weather (Pemberley)'''. The external application **38** responds with content **50** of the form " 'arguments', `Pemberley', '-2°C', 'light snow'". Since this is not suitable for providing to the occupant **18,** the responder **52** converts this into the more meaningful equivalent: "The weather at Pemberley is -2° Celsius with light snow."

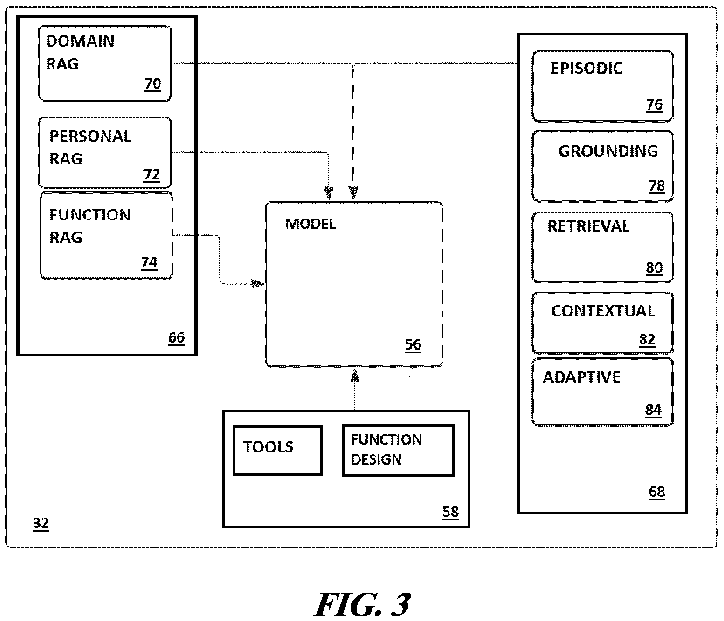

FIG. 3 shows additional features that are useful for promoting the model's ability to provide reliable outputs. A particular useful feature is a repository **66** that provides information used by the model **56** to augment its ability to retrieve information that is most pertinent to the prompt **28.** For those of the federation's members that rely on a memory to dynamically infer context, it is also useful to provide a memory bank **68** for use in storing and updating context information.

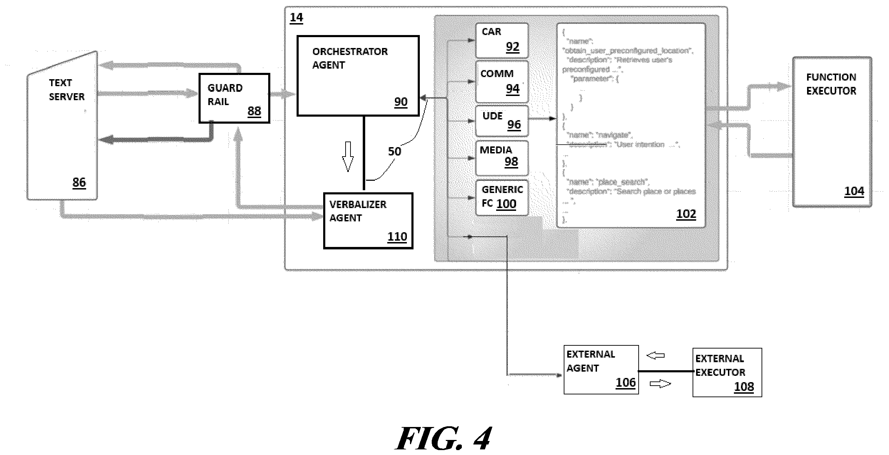

FIG. 4 shows further details of the repository **66** and the memory bank **68.**

The repository **66** features a domain-specific retrieval-augmentation module 70, a person-specific retrieval-augmentation module **72,** and a function-specific retrieval-augmentation module **74.**

The domain-specific retrieval-augmentation module **70** urges the model **56** to limit its output to those that are appropriate to a particular domain. In the context of the example given in connection with FIG. 2, this reduces the likelihood that the model **56** will inappropriately interpret "snow" as referring to other white powdery substances that are of limited interest within the meteorological domain of member **32.**

The person-specific retrieval augmentation module **72** urges the model **56** to provide outputs that are pertinent to a particular person, such as the occupant **18** of the vehicle **10.**

The function-specific retrieval-augmentation module **74** is particularly useful for the case in which the model **56** is expected to output make a function call **64** to the application-program interface **40.**

The memory bank **68** features one or more types of memory that permit the model **56** to update its assessment of context as it evolves, thus allowing the model **56** to essentially learn from experience. These types of memory feature an elastic context size that suits the member's domain.

Among these memories in the memory bank **68** is an episodic memory **76.** The episodic memory **76** is particularly useful for identifying specific events that correlate closely with the prompt **28** being processed. The use of episodic memory **76** provides a basis for replay of experience and also for easing the task of providing information to the occupant **18** using two or more channels, or modes, of information delivery, for example by using both the loudspeaker **24** and a display (not shown).

Also among these features is a grounding memory **78.** The grounding memory **78** provides information on how queries similar to the incoming query **28** were in fact processed in the context of the particular domain that the member **32** is specific to.

Among these features is a retrieval memory **80** that plays a role when the model **56** consults an external database. The retrieval memory **80** provides a way for the model **56** to base context on external information that the model **56** received in the course of consulting an external information-source. The retrieval memory 80 also provides many-shot examples to promote in-context learning.
Also among these features is a contextual memory **82** that enables the model **56** to modify context based on information from earlier prompts, essentially allowing the model **56** to learn from experience.

The memory bank also includes an adaptive memory **84** that provides the model **56** with information useful for adapting its behavior based on prior interactions, thereby permitting the model **56** to not only provide outputs based on context but to do so based on time-varying context.

Referring now to FIG. 4, an alternative embodiment of the automotive assistant **14** includes a text server **86** that receives the audio input **16** from the occupant **18** via the microphone **20** and that also provides the audio output **22** to the occupant **18** via the loudspeaker **24.** In addition, the text server **86** handles high-level context management, telemetry, and logging tasks. Communication between the text server **86** and the automotive assistant **14** passes through a guard rail **88** to block certain kinds of content.

From the guard rail **88,** communication passes to an orchestrator agent **90.** The orchestrator agent **90** decontextualizes the audio input **16** and if necessary, decomposes the audio input **16** into individual tasks.

The orchestrator agent **90** then proceeds to select one or more federal agents **92, 94, 96, 98, 100.** These include one or more of: a car-control agent **92** that handles functions for controlling features of the vehicle **10** itself; a communication agent **94** that handles communication between the vehicle **10** and various receiving entities outside the vehicle **10;** a universal data-exchange agent **96** that interacts with a framework that facilitates the transfer of data among various systems and applications; a media agent **98** that executes commands for playing various types of media; and a generic function-call agent **100** that is configured to execute a broad range of functions not otherwise handled by other agents. These federal agents **92, 94, 96, 98, 100** generate function calls **102** that are then provided to a function executor **104** for implementation and execution thereof. In some cases, a federal agent is an external federal agent **106** that is provided by an external source. Such an agent **106** generates function calls and provides them to an external executor **108.**

The orchestrator agent **90** then receives content **50** by a selected federal agent **92, 94, 96, 98, 100** and provides it to a verbalizer agent **110.** In the illustrated embodiment, the verbalizer agent **110** maintains a dialog history and offers the ability to summarize the content **50.** The verbalizer agent **110** also carries out further customization functions, including providing output in different languages.

Having described the invention and a preferred embodiment thereof, what is claimed as new and secured by letters patent is:

## Claims

1. An apparatus for responding to an audio input provided by an occupant of a vehicle, said apparatus comprising
an automotive assistant that executes on an infotainment system of said vehicle, said automotive assistant comprising:
an arbitrator that is configured to receive said audio input provided by said occupant and, based at least in part on said audio input, to select a domain-specific member from a federation of domain-specific members for providing information pertinent to responding to said audio input,
wherein said automotive assistant is configured to receive content from said selected domain-specific member and to provide audio output to respond to said audio input provided by said occupant, said audio output being based at least in part on said content from said selected domain-specific member of said federation of domain-specific members.

2. The apparatus of claim **1,** further comprising a first domain-specific member of said federation, wherein said first domain-specific member is embedded in said vehicle.

3. The apparatus of claim **1,** wherein said domain-specific members of said federation comprise a large language-model.

4. The apparatus of claim **1,** wherein said domain-specific members of said federation comprise a first domain-specific member and a second domain-specific member, wherein said first domain-specific member is embedded in said vehicle and wherein said second domain-specific member is at a remote server.

5. The apparatus of claim **1,** wherein said arbitrator comprises a large language-model.

6. The apparatus of claim **1,** wherein said arbitrator comprises a graph neural network.

7. The apparatus of claim **1,** wherein said arbitrator comprises a neural network.

8. The apparatus of claim **1,** wherein said arbitrator comprises a query divider, wherein said audio input includes a compound query that comprises plural atomic queries, wherein said query divider partitions said compound query into first and second atomic queries, wherein said arbitrator selects a first domain-specific member of said federation for providing content responsive to said first atomic query, and wherein said arbitrator selects a second domain-specific member of said federation for providing content responsive to said second atomic query.

9. The apparatus of claim **1,** wherein said automotive assistant further comprises a multiplexer configured to receive a member-selection signal that is indicative of said selected member of said federation, wherein each of said domain-specific members of said federation is in data communication with said multiplexer, wherein said multiplexer provides a prompt generated by said arbitrator to said selected domain-specific member of said federation.

10. The apparatus of claim **1,** wherein said automotive assistant further comprises first and second multiplexer configured to receive said member-selection signal, wherein each of said domain-specific members of said federation is in data communication with said first multiplexer, wherein each of said domain-specific members of said federation is in data communication with said second multiplexer, wherein said first multiplexer provides a prompt generated by said arbitrator to said selected domain-specific member of said federation, and wherein said second multiplexer receives content from said selected domain-specific member of said federation and provides said content to automotive assistant.

11. The apparatus of claim **1,** wherein said automotive assistant further comprises a response generator and a text-to-speech converter, wherein said response generator receives said content from said selected domain-specific member of said federation and generates a response based on said content and wherein said text-to-speech converter receives said response.

12. The apparatus of claim **1,** further comprising said vehicle.

13. The apparatus of claim **1,** further comprising said infotainment system.

14. The apparatus of claim **1,** wherein said arbitrator is one that has been trained jointly with a domain-specific member from said federation of domain-specific members.

15. The apparatus of claim **1,** wherein said arbitrator is one that has been trained severally with a domain-specific member from said federation of domain-specific members.

16. A method carried out by a processing system that comprises an automotive assistant that executes on an infotainment system of a vehicle, said method comprising causing said automotive assistant to carry out steps comprising:
receiving an audio input from an occupant in said vehicle,
selecting a domain-specific member from a federation of domain-specific members based at least in part on said audio input,
receiving content from said selected domain-specific member, and
using said content for providing audio output responsive to said audio input.
